# EUROPÄISCHE PATENTSCHRIFT

(11) **EP 1 225 797 B1**
(45) Veröffentlichungstag und Bekanntmachung des Hinweises auf die Patenterteilung: **17.01.2007**
(21) Anmeldenummer: 00974500.1
(22) Anmeldetag: 02.11.2000
(51) Int. Cl.: A01K 1/00

(54) **UNTERKUNFT FÜR TIERE, INSBESONDERE STALL**
ACCOMMODATION, ESPECIALLY A SHED, FOR ANIMALS
ABRI POUR ANIMAUX, NOTAMMENT ECURIE OU ETABLE

(30) Priorität: 02.11.1999 DE 19952576
(43) Veröffentlichungstag der Anmeldung: 31.07.2002
(73) Patentinhaber: LAGEMANN, Nicole, 60314 Frankfurt (DE)
(72) Erfinder: Lagemann, Bernd, 79761 Waldshut-Tiengen (DE)
(74) Vertreter: Weiss, Peter
(86) Internationale Anmeldenummer: PCT/EP2000/010799
(87) Internationale Veröffentlichungsnummer: WO 2001/032005

(56) Entgegenhaltungen:
- CH-A- 370 590
- DE-A- 2 439 251
- FR-A- 2 792 168
- NL-A- 7 901 533
- US-A- 4 367 694
- PATENT ABSTRACTS OF JAPAN vol. 1996, no. 10, 31. Oktober 1996 (1996-10-31) & JP 08 149926 A (NIPPON UEEBLOCK KK), 11. Juni 1996 (1996-06-11)

## Beschreibung

Die Erfindung betrifft eine Unterkunft für Tiere, insbesondere Stall mit einer Mehrzahl von Elementen, wie Wänden, Tore, Türen, Dächer, Beschattungen od. dgl..

Derartige Unterkünfte, Ställe sind in vielfältigster Form und Ausführung bekannt und gebräuchlich.

Da Ställe heutzutage gut durchlüftet werden müssen, sind meistens Stallwände, Tore od. dgl. als Lattenelemente mit entsprechenden Zwischenräumen ausgebildet. Nachteilig hierbei ist, dass derartige Holzlattenelemente nach einer gewissen Zeit durch Regeneinschlag angegriffen werden, schnell verrotten und ausgetauscht werden müssen. Ferner sind sie nur begrenzt bei Druckbeautschlagung durch Tiere haltbar und brechen häufig aus.

Zudem ist bei derartigen Elementen, Türen oder Toren nachteilig, dass nur bei grossen Öffnungen genügend Luft zur Belüftung des Stalles eintreten kann.

Ferner schlucken derartige Lattenelemente viel Licht, so dass die Unterkunft, insbesondere der Stall häufig auch tagsüber beleuchtet werden muss. Zudem ist nachteilig, dass bei derartig belüfteten Unterkünften, insbesondere bei lattenartig ausgebildeten Wänden oder Toren, beispielsweise bei Schlagregen viel Feuchtigkeit und Wind in das Stallinnere gelangt, was unerwünscht ist.

Die FR 2 732 859 beschreibt eine Unterkunft für Tiere, welche aus einer Mehrzahl von Streben und Gitterrohrelementen gebildet ist. Anstelle von Seitenwänden sind Maschendrähte od. dgl. vorgesehen, die eine seitliche Begrenzung bilden.

Die CH 370 590 beschreibt einen mobilen Zwinger für Kleintiere, wobei die einzelnen Wände aus Stab- bzw. Rohrelementen gebildet sind, zwischen welchen Maschendraht vorgesehen ist. Die Wände sind als Maschendrahtgitterwände ausgebildet.

Die FR 2 687 542 beschreibt ein modulares Element für eine Unterkunft für Tiere, bei welcher als Wandelemente Hartplastiken oder herkömmliche Gewebe, die mit PVC beschichtet sein können, verwendet werden können. Nachteilig daran ist, dass diese seitlichen Schlagregen durchlassen und hierdurch der Stall bei Regen unerwünscht genässt wird.

Der vorliegenden Erfindung liegt die Aufgabe zugrunde, eine Unterkunft für Tiere, insbesondere einen Stall der eingangs genannten Art zu schaffen, mit welcher die o.g. Nachteile beseitigt werden. Ferner soll eine Belüftung sowie ein Lichteinfall und ein Abhalten von Regenwasser wesentlich verbessert werden. Ein Windschutz soll ebenfalls gewährleistet sein.

Zur Lösung dieser Aufgabe führt, dass die Beschichtung als Silikon oder Teflon auf das Gittergewebe aufgetragen ist.

Bei der vorliegenden Erfindung sind Elemente des Stalles, wie beispielsweise Wände, Trennwände, Aussenwände, Tore, Türen, Beschattungsanlagen, Dächer, Vordächer od. dgl. aus einem Gittergewebe gebildet, welches vorzugsweise elastisch in entsprechenden Halteelementen, Halterahmen od. dgl. eingesetzt ist.

Dabei kann das Gittergewebe direkt, beispielsweise auf einer Holzkonstuktion od. dgl. aufgespannt sein. Hier sei der Erfindung keine Grenze gesetzt.

Durch dieses Gittergewebe, welches luft- und lichtdurchlässig ist, kann eine gute Belüftung bei gleichzeitig hohem Lichteinfall erfolgen.

Damit insbesondere Schlagregen oder Regenwasser nicht durch das Gittergewebe durchtreten kann und bei Beaufschlagung von aussen sofort abperlt, ist das Gittergewebe zumindest einseitig mit einer Beschichtung versehen. Die Beschichtung kann aus Silikon hergestellt sein. Auch ein Teflonisieren des Gittergewebes als Beschichtung ist denkbar. Die Gitteröffnungen bleiben dabei erhalten, wobei unter den Begriff Beschichtung eine Imprägnierung zu verstehen ist.

Durch die hydrophobe Beschichtung perlt das Regenwasser direkt am Gittergewebe ab und fliesst an diesem ab.

Es hat sich ferner als vorteilhaft erwiesen, das entsprechende Element, insbesondere Gittergewebe, beispielsweise über einen Sockel eines Stallgebäudes bzw. einer Unterkunft herausragen zu lassen, damit das von aussen auftreffende Regenwasser ausserhalb der Unterkunft abgeleitet wird.

Sollte jedoch beispielsweise Regenwasser auch innerhalb des Gittergewebes an diesem in den Stall abfliessen, so kann über entsprechende Abflussrinnen, Drainagen od. dgl. das Wasser abgeleitet werden. Der Stall bleibt hierdurch trocken, was dem Wohlbefinden und der Gesundheit der Tiere zugute kommt.

Ferner gewährleistet eine entsprechende Beschichtung eine lange Haltbarkeit des Elementes, insbesondere des Gittergewebes. Auch ist denkbar die Beschichtung oder Imprägnierung sowie auch das Gittergewebe selbst mit entsprechendem Flammenschutzmitteln brandhemmend zu versehen bzw. zu gestalten.

Weitere Vorteile, Merkmale und Einzelheiten der Erfindung ergeben sich aus der nachfolgenden Beschreibung bevorzugter Ausführungsbeispiele sowie anhand der Zeichnung; diese zeigt in
Figur 1 eine perspektivisch dargestellte Ansicht einer erfindungsgemässen Unterkunft für Tiere;
Figur 2 eine schematisch dargestellte Seitenansicht auf ein Element der Unterkunft aus im wesentlichen Gittergewebe.

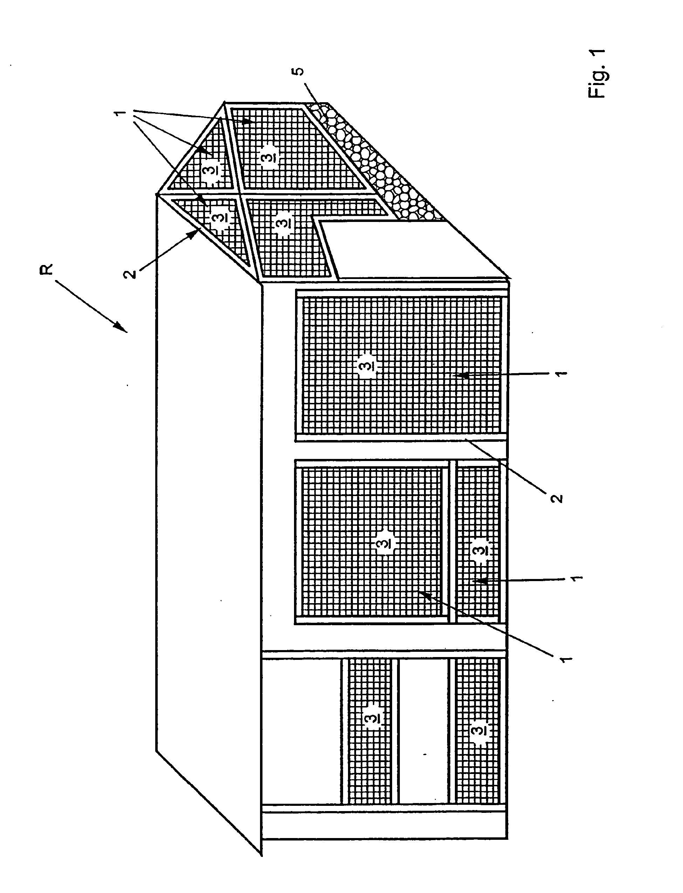

Gemäss Figur 1 weist eine erfindungsgemässe Unterkunft R, insbesondere Stall für Tiere eine Mehrzahl von Elementen 1 auf, die beispielsweise als Wände, Tore, Türen, Dächer, Beschattungsanlagen od. dgl. ausgebildet sein können. Vorzugsweise weisen die entsprechenden Elemente 1 Halteelemente 2 auf, die rahmenartig ausgebildet sind. Diese können beispielsweise auf einem Sockel (5) der Unterkunft (R) aufsitzen oder diese nach aussen überragen.

Im wesentlichen ist das Element 1 als Gittergewebe 3 ausgebildet. Das Element 1 und das Gittergewebe 3 bildet für die Unterkunft R eine Wand, ein zu öffnendes Tor, eine Türe oder eine Beschattung. Hier sei der Erfindung keine Grenze gesetzt.

Bevorzugt ist das Gittergewebe 3 luft- und/oder lichtdurchlässig ausgebildet, so dass die Unterkunft R belüftet wird.

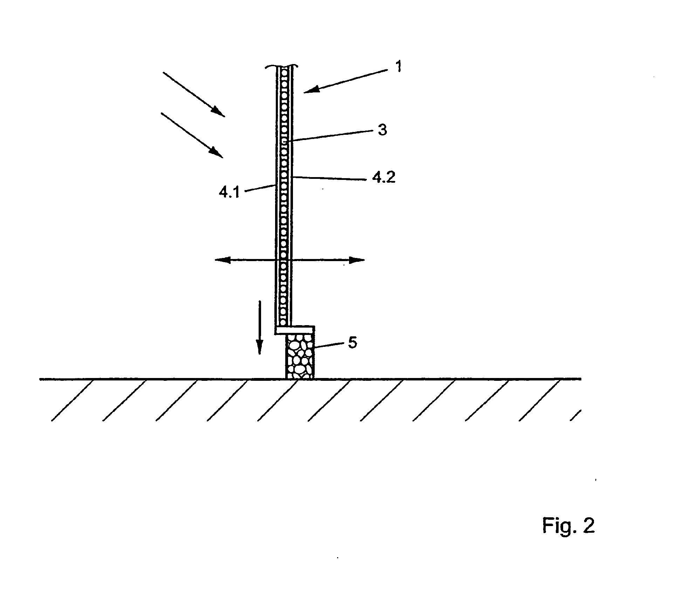

Es hat sich als besonders vorteilhaft gezeigt, das Gittergewebe 3 mit einer Beschichtung 4.1, 4.2 zu versehen, die einseitig aber auch beidseitig auf das Gittergewebe 3 aufgetragen sein kann, wie es insbesondere in Figur 2 dargestellt ist.

Dabei bleibt das Gittergewebe 3 luft- und lichtdurchlässig.

Die Beschichtung 4.1, 4.2 ist vorzugsweise aus Silikon gebildet. Durch die Beschichtung 4.1, 4.2 bekommt das Gittergewebe 3 eine wasserabweisende Eigenschaft, die erhebliche Vorteile mit sich bringt.

Wird beispielsweise das Element 1, insbesondere das Gittergewebe 3 von aussen durch Regen, Regentropfen, Schlagregen od. dgl. beaufschlagt, so perlt sofort unmittelbar auf der Beschichtung das Wasser ab, so dass insgesamt der Regen im wesentlichen aussen am Gittergewebe 3 entlang ablaufen kann.

Hierdurch wird verhindert, dass Regenwasser in die Unterkunft R, insbesondere in den Stall eintritt. Gleichzeitig wird ein permanentes Belüften durch die Vielzahl von Öffnungen im Gittergewebe 3 gewährleistet.

Ferner ist von Vorteil bei der vorliegenden Erfindung, dass derartige Gittergewebe ggf. elastisch ausgebildet sind und bei Druckbeaufschlagung nicht brechen oder zerstört werden. Zudem sind sie wetterfest und UV-lichtbeständig, so dass eine Haltbarkeit erhöht ist. Ferner lassen sie sich sehr leicht austauschen, sollten sie beschädigt sein.

Die Beschichtung 4.1, 4.2 kann beispielsweise als silikonisierte Paste auf das Gittergewebe 3 aufgetragen werden. Hierdurch wird eine wasserabweisende, wasserabperlende Beschichtung geschaffen, die Schlagregen oder Regenwasser sofort abperlen lässt, so dass kein Wasser in die Unterkunft R eintritt.

Auch soll vom vorliegenden Erfindungsgedanken umfasst sein, als Beschichtung Silikone zu verwenden, um eine hydrophobe Beschichtung 4.1, 4.2 zu schaffen.

Ebenfalls soll daran gedacht sein, das Gittergewebe 3 zu teflonisieren, um ein Gittergewebe 3 mit einer hydrphoben Beschichtung 4.1, 4.2 zu schaffen.

### Positionszahlenliste

| | | | | | |
|---|---|---|---|---|---|
| 1 | Element | 34 | | 67 | |
| 2 | Halteelement | 35 | | 68 | |
| 3 | Gittergewebe | 36 | | 69 | |
| 4 | Beschichtung | 37 | | 70 | |
| 5 | Sockel | 38 | | 71 | |
| 6 | | 39 | | 72 | |
| 7 | | 40 | | 73 | |
| 8 | | 41 | | 74 | |
| 9 | | 42 | | 75 | |
| 10 | | 43 | | 76 | |
| 11 | | 44 | | 77 | |
| 12 | | 45 | | 78 | |
| 13 | | 46 | | 79 | |
| 14 | | 47 | | | |
| 15 | | 48 | | | |
| 16 | | 49 | | R | Unterkunft |
| 17 | | 50 | | | |
| 18 | | 51 | | | |
| 19 | | 52 | | | |
| 20 | | 53 | | | |
| 21 | | 54 | | | |
| 22 | | 55 | | | |
| 23 | | 56 | | | |
| 24 | | 57 | | | |
| 25 | | 58 | | | |
| 26 | | 59 | | | |
| 27 | | 60 | | | |
| 28 | | 61 | | | |
| 29 | | 62 | | | |
| 30 | | 63 | | | |
| 31 | | 64 | | | |
| 32 | | 65 | | | |
| 33 | | 66 | | | |

## Patentansprüche

1. Unterkunft für Tiere, insbesondere Stall mit einer Mehrzahl von Elementen (1), wie Wänden, Tore, Türen, Dächer, Beschattungen od. dgl., wobei
zumindest eines der Elemente (1) im wesentlichen aus einem Gittergewebe (3) luft- und lichtdurchlässig ausgebildet und das Gittergewebe (3) ein-oder beidseitig mit einer hydrophoben Beschichtung (4.1, 4.2) versehen ist wobei das Gittergewebe (3) mit der Beschichtung (4.1, 4.2) luft- und lichtdurchlässig ausgebildet ist, **dadurch gekennzeichnet daß** die Beschichtung (4.1, 4.2) als Silikon oder Teflon auf das Gittergewebe (3) aufgetragen ist.

2. Unterkunft nach Anspruch 1 oder 2, **dadurch gekennzeichnet, dass** das Gittergewebe (3) an Halteelementen (2), Rahmenelementen od. dgl. insbesondere elastisch festgelegt, insbesondere eingespannt ist.

3. Unterkunft nach Anspruch 3, **dadurch gekennzeichnet, dass** das Gittergewebe (3), insbesondere die Halteelemente (2), über einen Sockel (5) eines Gebäudes hervorragen.

4. Unterkunft nach wenigstens einem der Ansprüche 1 bis 4, **dadurch gekennzeichnet, dass** das Gittergewebe (3) und/oder Beschichtung (4.1, 4.2) mit brandhemmenden Flammschutzmitteln versehen sind.

## Claims

1. Accommodation for animals, in particular a shed having a plurality of elements (1), such as walls, gates, doors, roofs, shades or the like, wherein at least one of the elements (1) is constructed in an air-permeable and light-transmitting manner substantially from an open weave fabric (3) and the open weave fabric (3) is provided at one or both sides with a hydrophobic coating (4.1, 4.2), wherein the open weave fabric (3) with the coating (4.1, 4.2) is of an air-permeable and light-transmitting design, **characterized in that** the coating (4.1, 4.2) is applied in the form of silicone or Teflon onto the open weave fabric (3).

2. Accommodation according to claim 1 or 2, **characterized in that** the open weave fabric (3) is in particular elastically fastened, in particular clamped to holding elements (2), frame elements or the like.

3. Accommodation according to claim 3, **characterized in that** the open weave fabric (3), in particular the holding elements (2), project beyond a base (5) of a building.

4. Accommodation according to at least one of claims 1 to 4, **characterized in that** the open weave fabric (3) and/or coating (4.1, 4.2) are provided with fire-retardant flameproofing agents.

## Revendications

1. Abri pour animaux, en particulier écurie avec une pluralité d'éléments (1), tels que parois, portillons, portes, toits, ombrages ou autres,
au moins l'un des éléments (1) étant réalisé perméable à l'air et à la lumière, substantiellement en un tissu grille (3), et que le tissu grille (3) est muni, d'un ou des deux côtés, d'un revêtement hydrophobe (4.1, 4.2), le tissu grille (3) avec le revêtement (4.1, 4.2) étant réalisé perméable à l'air et à la lumière,
**caractérisé par le fait que**
le revêtement (4.1, 4.2) est appliqué sous forme de silicone ou de téflon sur le tissu grille (3).

2. Abri selon la revendication 1 ou 2, **caractérisé par le fait que** le tissu grille (3) est fixé, en particulier tendu, en particulier de manière élastique, à des éléments de support (2), en particulier des éléments de cadre ou autres.

3. Abri selon la revendication 3, **caractérisé par le fait que** le tissu grille (3), en particulier les éléments de support (3), font saillie au-delà d'un socle (5) d'un bâtiment.

4. Abri selon au moins l'une des revendications 1 à 4, **caractérisé par le fait que** le tissu grille (3) et/ou le revêtement (4.1, 4,2) sont pourvus de produits ignifuges retardateurs du feu.
